# FASCICULE DE BREVET EUROPEEN

(11) **EP 2 415 149 B1**
(45) Date de publication et mention de la délivrance du brevet: **06.05.2015**
(21) Numéro de dépôt: 10711687.3
(22) Date de dépôt: 30.03.2010
(51) Int. Cl.: H02M 7/5388

(54) **CIRCUIT D'ALIMENTATION D'UN MOTEUR ET ORGANE DE COMMANDE DE VOL EQUIPÉ D'UN TEL CIRCUIT**
MOTORVERSORGUNGSKREISLAUF UND FLUG-STEUERUNGSMITTEL DAMIT
MOTOR SUPPLY CIRCUIT AND FLIGHT CONTROL MEANS EQUIPED WITH SUCH A CIRCUIT.

(30) Priorité: 03.04.2009 FR 0901630
(43) Date de publication de la demande: 08.02.2012
(73) Titulaire: SAGEM DEFENSE SECURITE, 92100 Boulogne Billancourt (FR)
(72) Inventeur: CASIMIR, Roland, F-75015 Paris (FR); FOURMONT, Tony, F-75015 Paris (FR)
(74) Mandataire: Lavialle, Bruno François Stéphane
(86) Numéro de dépôt international: PCT/EP2010/054225
(87) Numéro de publication internationale: WO 2010/112514

(56) Documents cités:
- EP-A- 2 006 991
- DE-A1-102005 009 376
- GB-A- 2 427 968
- US-A1- 2004 160 792

## Description

La présente invention concerne un circuit d'alimentation d'un moteur électrique utilisable par exemple pour l'actionnement d'une surface aérodynamique mobile d'un aéronef. L'invention concerne également un organe de commande de vol d'un aéronef comportant une telle surface aérodynamique mobile.

Dans les aéronefs actuels sont désormais de plus en plus utilisés les systèmes de commande de vol électriques. Ces systèmes comprennent des organes de commande de vol comportant une surface aérodynamique mobile, telle qu'un aileron, un volet ou un élevon, associée à deux moteurs électriques reliés chacun à un circuit d'alimentation piloté à partir de signaux de commande émanant des instruments de pilotage manipulés par le pilote de l'aéronef. Les deux moteurs fonctionnent en alternance de sorte qu'en cas de défaillance d'un des moteurs, le deuxième moteur puisse être utilisé en remplacement.

Chaque circuit d'alimentation comprend une pluralité de ponts onduleurs composés de trois bras de pont, eux-même pourvus des moyens de leur connexion chacun à un enroulement du moteur. Chaque bras de pont onduleur comporte en série un premier transistor bipolaire à grille isolée et un deuxième transistor bipolaire à grille isolée qui sont reliés à une unité de commande reliée aux instruments de pilotage.

Lorsque l'un des moteurs n'est pas utilisé, il est déconnecté du circuit d'alimentation et est néanmoins censé exercer un effort sur la surface aérodynamique mobile de manière à amortir les mouvements de celle-ci.

Un circuit d'amortissement dédié est donc prévu entre le moteur et le circuit d'alimentation pour dissiper l'énergie produite par ce dernier lorsque celui-ci est entraîné par la surface aérodynamique mobile mue par l'autre moteur ou sous l'effet dynamique. Un tel circuit d'amortissement est relié au moteur par un relais électromécanique qui connecte le moteur sélectivement au circuit d'alimentation et au circuit d'amortissement. Un tel relais présente plusieurs inconvénients : une faible durée de vie surtout en raison des commutations en charge, une tenue aléatoire aux vibrations, une masse et un volume peu compatibles avec les impératifs de gain de poids et de place imposés par les contraintes de conception des aéronefs. Une défaillance de l'organe principal du relais (bobine ou commande) entraîne en outre la perte de la totalité de la capacité d'amortissement.

Un autre exemple de l'art antérieur est décrit dans le document WO 2007029544. Un but de l'invention est de fournir une solution d'amortissement qui soit simple, fiable et légère.

A cet effet, on prévoit, selon l'invention, un circuit d'alimentation d'un moteur électrique, comprenant au moins un pont onduleur composé d'une pluralité de bras de pont eux-mêmes pourvus des moyens de leur connexion chacun à un enroulement du moteur, chaque bras de pont comportant en série un premier transistor bipolaire à grille isolée et un transistor à effet de champ à jonction qui sont reliés à une unité de commande, le circuit comprenant un deuxième transistor bipolaire à grille isolée monté en série avec chaque transistor à effet de champ à jonction et relié à l'unité de commande, et une résistance d'amortissement montée en parallèle du deuxième transistor bipolaire à grille isolée.

Ainsi, le circuit d'alimentation possède un mode actif dans lequel il assure l'alimentation du moteur et un mode passif dans lequel il assure un amortissement. Dans le mode actif, les premiers transistors bipolaires et les transistors à effet de champ sont pilotés pour alimenter successivement les enroulements du moteur tandis que les deuxièmes transistors bipolaires sont maintenus fermés par l'unité de commande pour court-circuiter les résistances. Dans le mode passif, le circuit d'alimentation est déconnecté du réseau électrique : tous les transistors bipolaires sont naturellement ouverts car il n'y a pas d'énergie disponible sur le pont et les transistors à effet de champ à jonction demeurent naturellement fermés en l'absence d'alimentation : les enroulements du moteur sont donc raccordés aux résistances d'amortissement. Les transistors à effet de champ à jonction ont une fiabilité et une durée de vie supérieures à celles d'un relais, une masse et un volume inférieurs à ceux d'un relais. En cas de défaillance à l'état ouvert d'un des transistors à effet de champ à jonction, seule la résistance raccordée à celui-ci n'est plus utilisable en amortissement de sorte que l'impact d'une telle défaillance est limité : l'amortissement global du moteur est moindre mais non nul. Le pilotage des deuxièmes transistors bipolaires permet en outre d'assurer une variation de l'amortissement.

De préférence, le circuit comporte en entrée des moyens de raccordement à un réseau continu auxquels est associé un coupe-circuit agencé pour isoler le circuit d'alimentation du réseau lorsque les résistances d'amortissement sont alimentées.

Le coupe-circuit empêche qu'en mode passif les diodes internes des premiers transistors bipolaires deviennent actives et que des surtensions résiduelles remontent vers le réseau lorsque les résistances d'amortissement ne sont pas suffisantes pour absorber la totalité des surtensions produites par le moteur. L'invention a également pour objet un organe de commande vol d'un aéronef, comportant une surface de vol associée à au moins un moteur d'entraînement relié à un circuit d'alimentation du type précité.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 représente schématiquement un organe de commande de vol conforme à l'invention,
- la figure 2 est une vue partielle, analogue à la figure 1, d'une variante de réalisation.

En référence à la figure, l'organe de commande de vol conforme à l'invention comporte une surface aérodynamique mobile 1, telle qu'un aileron, un volet, un drapeau de dérive ou un élevon, montée mobile sur la structure d'un aéronef (voilure, empennage, dérive).

La surface aérodynamique mobile 1 est déplacée au moyen de deux moteurs 2 associés chacun à un circuit d'alimentation généralement désigné en 3. Les circuits d'alimentation 3 sont raccordés au réseau continu 4 de l'aéronef et sont reliés de façon connue en soi à une centrale de commande programmée pour assurer le fonctionnement de l'aéronef et actionnable depuis le poste de pilotage via des instruments de commande manipulés par le pilote. L'arbre de sortie des moteurs 2 peut être relié à l'axe d'articulation de la surface aérodynamique mobile 1 pour entraîner celui-ci en rotation ou peut être pourvu d'une vis sur laquelle est engagé un écrou solidaire d'un levier solidaire de la surface aérodynamique mobile 1. Si la surface aérodynamique mobile 1 est montée pour coulisser, l'arbre de sortie des moteurs 1 peut être pourvu d'une vis sur laquelle est engagé un écrou solidaire de la surface aérodynamique mobile 1 ou agir sur deux bras d'un parallélogramme déformable dont est solidaire la surface aérodynamique mobile 1.

Chaque circuit de d'alimentation 3 comporte une ligne d'entrée comportant un coupe-circuit 5 et une ligne de sortie entre lesquelles sont montés en parallèles les uns aux autres trois bras de ponts onduleurs 6 pourvus des moyens de leur connexion chacun à un enroulement du moteur 2. Chaque bras de pont onduleur 6 comporte en série un premier transistor bipolaire à grille isolée 7 (ou IGBT de l'anglais « insulated gate bipolar transistor ») et un transistor à effet de champ à jonction 8 (ou JFET de l'anglais « junction field effect transistor »). La connexion d'un des enroulements du moteur se fait entre ces deux transistors.

Chaque circuit d'alimentation 3 comprend des deuxièmes transistors bipolaires à grille isolée 9 montés chacun en série avec un des transistors à effet de champ à jonction 8 et des résistances d'amortissement 10 montées chacune en parallèle d'un des deuxièmes transistors bipolaires 9.

Les transistors 7, 8, 9 et le coupe-circuit 5 sont reliés à une unité de commande 11 elle-même reliée à la centrale de commande.

Chaque circuit d'alimentation 3 possède un mode actif dans lequel il assure l'alimentation du moteur 2 correspondant pour déplacer la surface aérodynamique mobile 1 et un mode passif dans lequel il assure un amortissement du mouvement de la surface aérodynamique mobile 1.

Dans le mode actif, les premiers transistors bipolaires 7 et les transistors à effet de champ à jonction 8 sont pilotés pour alimenter successivement les enroulements du moteur 2 tandis que les deuxièmes transistors bipolaires 9 sont maintenus fermés par l'unité de commande 11 pour court-circuiter les résistances d'amortissement 10.

Dans le mode passif, tous les transistors bipolaires 7, 9 sont naturellement ouverts en l'absence d'alimentation, les transistors à effet de champ à jonction 8 demeurent naturellement fermés en l'absence d'alimentation pour raccorder les enroulements du moteur 2 aux résistances d'amortissement 10.

En cas d'absence de tension sur la ligne d'entrée en amont du coupe-circuit 5 (coupure du réseau 4), l'unité de commande 11 commande l'ouverture du coupe-circuit 5 pour empêcher qu'en mode passif les diodes internes des transistors bipolaires 7 et 9 deviennent actives et que des surtensions résiduelles remontent vers le réseau 4. Une telle remontée aurait pu se produire en l'absence de coupe-circuit 5 si les résistances d'amortissement n'étaient pas suffisantes pour absorber la totalité des surtensions produites par le moteur 2.

La centrale de commande pilote l'unité de commande 11 de chaque circuit d'alimentation 3 pour mettre l'un des circuits d'alimentation 3 dans son mode actif et l'autre circuit d'alimentation 3 dans son mode passif. Ainsi, le moteur 2 raccordé au circuit d'alimentation 3 dans le mode actif assure le déplacement de la surface aérodynamique mobile 1 et le moteur 2 raccordé au circuit d'alimentation 3 dans le mode passif assure l'amortissement du mouvement de la surface aérodynamique mobile 1. En effet, dans ce dernier circuit d'alimentation 3, l'énergie électriques produite par le moteur 2 mû par la surface aérodynamique mobile 1 sont évacuées et consommées dans les résistances d'amortissement 10.

L'unité de commande 11 peut commander l'ouverture ou la fermeture simultanée de tout ou partie des deuxièmes transistors bipolaires 9 ou une ouverture (ou une fermeture) successive de ceux-ci.

Dans certains cas, la centrale de commande peut piloter l'unité de commande 11 de chaque circuit d'alimentation 3 pour mettre les deux circuits d'alimentation 3 dans le mode passif de manière à laisser la surface aérodynamique mobile 1 en drapeau.

Avec le circuit de l'invention, les deuxièmes transistors bipolaires peuvent être sous-dimensionnés en tension et surdimensionnés en courant car ils fonctionnent en statique.

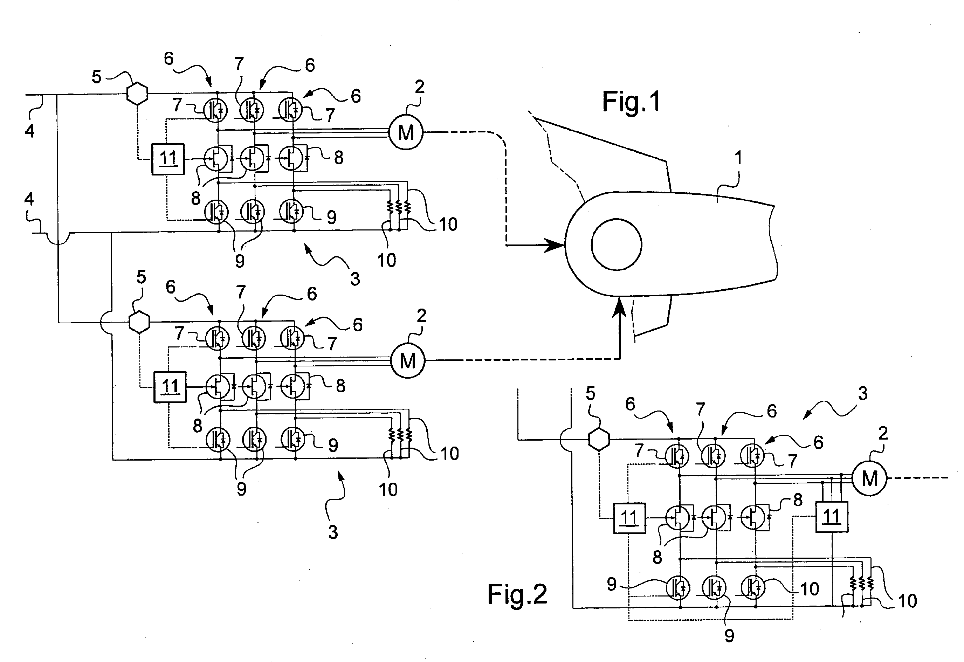

Dans la variante de la figure 2, un circuit électronique autonome 12 est relié aux enroulements et monté en parallèle des transistors à effet de champ à jonction 8 et des transistors bipolaires 9.

Le circuit électronique autonome 12 est agencé pour piloter en continu ou par intermittences les transistors bipolaires 9 et ainsi augmenter l'amortissement. Dans ce cas, l'amortissement augmente comme l'énergie restituée par le moteur (cas d'une rafale sur la surface aérodynamique mobile 1). Le circuit électronique autonome 12 fonctionne lorsque le moteur produit une énergie suffisante pour l'alimenter.

Bien entendu, l'invention n'est pas limitée au mode de réalisation décrit mais englobe toute variante entrant dans le champ de la définition de l'invention figurant dans les revendications.

En particulier, le coupe-circuit est facultatif si les résistances 10 sont correctement dimensionnées pour tous les cas d'utilisation.

En outre, à titre de sécurité, on peut prévoir deux circuits électroniques autonomes.

## Revendications

1. Circuit d'alimentation d'un moteur électrique, comprenant une pluralité de bras de ponts onduleurs pourvus des moyens de leur connexion chacun à un enroulement du moteur, **caractérisé en ce que** chaque bras de pont onduleur comporte en série un premier transistor bipolaire à grille isolée et un transistor à effet de champ à jonction qui sont reliés à une unité de commande, et **en ce que** le circuit comprend un deuxième transistor bipolaire à grille isolée monté en série avec chaque transistor à effet de champ et relié à l'unité de commande, et une résistance d'amortissement monté en parallèle du deuxième transistor bipolaire.

2. Circuit selon la revendication 1, comportant en entrée des moyens de raccordement à un réseau continu auxquels est associé un coupe-circuit agencée pour isoler le circuit d'alimentation du réseau lorsque les résistances d'amortissement sont alimentées.

3. Circuit selon la revendication 1, comportant au moins un circuit électronique autonome qui est relié aux enroulements en parallèle des deuxièmes transistors bipolaires et des transistors à effet de champ et qui est agencé pour piloter en continu ou par intermittences les deuxièmes transistors bipolaires 9 et ainsi augmenter l'amortissement.

4. Organe de commande vol d'un aéronef, comportant une surface aérodynamique mobile associée à au moins un moteur d'entraînement relié à un circuit d'alimentation selon l'une des revendications 1 à 3.

## Patentansprüche

1. Versorgungsschaltung für einen Elektromotor, umfassend eine Vielzahl von Wechselrichterbrückenarmen, die mit Mitteln für ihre jeweilige Verbindung mit einer Wicklung des Motors versehen sind, **dadurch gekennzeichnet, dass** jeder Wechselrichterbrückenarm in Reihe einen ersten Bipolartransistor mit isolierter Gate-Elektrode und einen Sperrschicht-Feldeffekttransistor umfasst, die mit einer Steuereinheit verbunden sind, und dass die Schaltung einen zweiten Bipolartransistor mit isolierter Gate-Elektrode umfasst, der in Reihe mit jedem Sperrschicht-Feldeffekttransistor geschaltet und mit der Steuereinheit verbunden ist, sowie einen Dämpfungswiderstand, der parallel zum zweiten Bipolartransistor geschaltet ist.

2. Schaltung nach Anspruch 1, umfassend am Eingang Anschlussmittel zum Anschluss an ein Gleichstrom-Netz, mit dienen eine Sicherung verbunden ist, die derart ausgebildet ist, dass sie die Versorgungsschaltung vom Netz trennt, wenn die Dämpfungswiderstände gespeist werden.

3. Schaltung nach Anspruch 1, umfassend mindestens eine autonome elektronische Schaltung, die mit den Wicklungen parallel zu den zweiten Bipolartransistoren und den Feldeffekttransistoren verbunden und derart ausgebildet ist, dass sie die zweiten Bipolartransistoren 9 kontinuierlich oder in Abständen steuert und so die Dämpfung erhöht.

4. Flugsteuerungsorgan für ein Flugzeug, umfassend eine bewegliche aerodynamische Oberfläche, die mit mindestens einem Antriebsmotor verbunden ist, der an eine Versorgungsschaltung nach einem der Ansprüche 1 bis 3 angeschlossen ist.

## Claims

1. A power supply circuit for an electric motor, the circuit comprising a plurality of inverter bridge arms, each having means for connection to a respective winding of the motor, wherein each inverter bridge arm comprises in series a first insulated gate bipolar transistor and a junction field effect transistor that are connected to a controller, and wherein the circuit includes a second insulated gate bipolar transistor connected in series with each field effect transistor and connected to the controller, and a damping resistor connected in parallel with the second bipolar transistor.

2. A circuit according to claim 1, including input means for connection to a DC network and associated with a cutout arranged to isolate the power supply circuit from the network when power is being dissipated in the damping resistors.

3. A circuit according to claim 1, including at least one independent electronic circuit that is connected to the windings in parallel with the second bipolar transistors and the field effect transistors and that is arranged to control the second bipolar transistors 9 continuously or intermittently, thereby increasing damping.

4. An aircraft flight control member including a movable airfoil associated with at least one drive motor connected to a power supply circuit according to claim 1.
